(19) **Europäisches Patentamt**

**European Patent Office**

**Office européen des brevets**

(11) **EP 1 118 872 B1**

(12) **EUROPEAN PATENT SPECIFICATION**

(45) Date of publication and mention
of the grant of the patent:
**27.04.2005 Bulletin 2005/17**

(51) Int Cl.⁷: **G01S 7/28**, G01S 13/93,
H01Q 1/52

(21) Application number: **01101138.4**

(22) Date of filing: **19.01.2001**

(54) **Shielding device for a millimeter wave radar casing to reduce influence of ground clutter**

Abschirmung für ein Millimeterwellen-Radar-Gehäuse zur Reduktion des Bodenstörechos

Blindage pour un boitier de radar à ondes millimétriques pour supprimer des échos parasites du sol

(84) Designated Contracting States:
**DE FR**

(30) Priority: **19.01.2000 JP 2000014023**

(43) Date of publication of application:
**25.07.2001 Bulletin 2001/30**

(73) Proprietor: **Hitachi, Ltd.**
**Tokyo (JP)**

(72) Inventors:
• **Okai, Fumihiko**
**Hitachinaka-shi, Ibaraki 312-0063 (JP)**
• **Hanawa, Kazuhiko**
**Hitachinaka-shi, Ibaraki 312-0061 (JP)**
• **Takano, Kazuaki**
**Mito-shi, Ibaraki 310-0903 (JP)**

(74) Representative: **Beetz & Partner Patentanwälte**
**Steinsdorfstrasse 10**
**80538 München (DE)**

(56) References cited:
**EP-A- 0 055 420**   **DE-A- 19 724 320**
**US-A- 3 683 394**   **US-A- 5 963 176**

## Description

Background of the Invention

Field of the Invention

The present invention relates to a millimeter wave radar apparatus for transmitting and receiving millimeter electric waves to detect objects on the ground, and more particularly to a millimeter wave radar which is made less vulnerable to the influence of ground clutters due to side lobes.

Description of the Related Art

Conceivable radars for use in autonomous driving of vehicles and for the collision avoidance include a millimeter wave radar. In a millimeter wave radar, however, background noise is increased by ground clutters generated by side lobes, especially downward ones, of the transmitted electric wave (millimeter wave), and required signals from the target are buried in the noise, resulting in a deterioration in the capability to detect the target object.

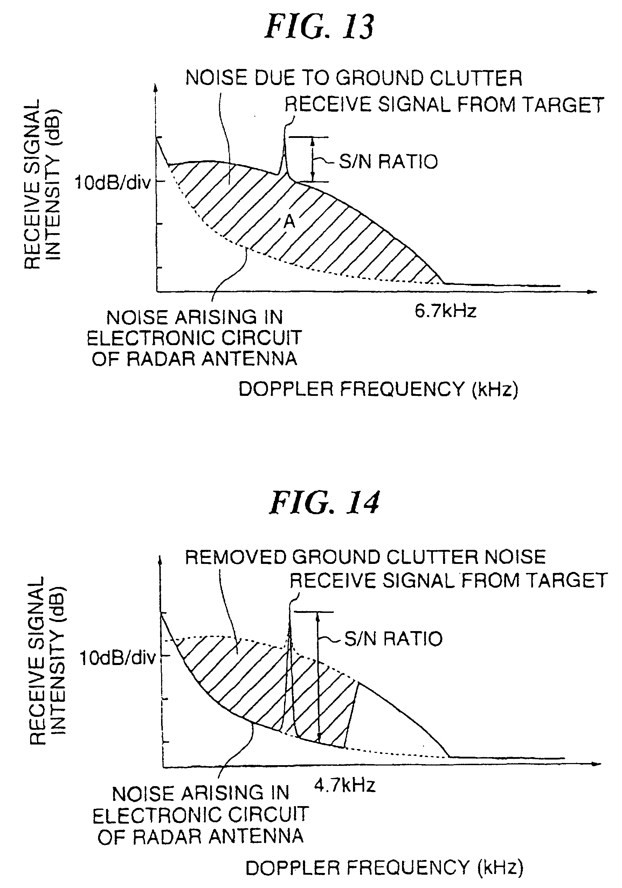

To address this clutter problem, according to the Japanese Published Unexamined Patent Application No. Hei 10-126146, side lobes giving rise to clutters are intercepted by fitting metal wall or absorber around a transmission/reception antenna (transmit and receive antennas), to be housed in an antenna unit, to protrude from the surface of the transmission/reception antenna as illustrated in Fig. 13. This method to fit metal wall around the transmission/reception antenna within the antenna unit may complicate the structure of the transmission/reception antenna surface or increase the antenna unit size.

EP 0 055 420 discloses a shielding arrangement for a radar type ground speed sensor. A shield is mounted beneath a vehicle in the path of a horizontally moving side lobe. The shield deflects a side lobe down onto the road surface, or it may be used to redirect a side lobe up against the floor for the beam performing multiple reflections for attenuation.

US 5,963,176 discloses an antenna system with edge treatment means for diminishing antenna transmitting and receiving diffractions, side lobes and clutter. The edge treatment can include an array of corrugations, which are about a quarter of a wavelength deep for scattering side lobes.

DE 197 24 320 A1 discloses a method for manufacturing a heatable antenna lens. An antenna lens constituted of a dielectric body comprises electrical conductors therein.

US 3,683,394 discloses a clutter fence for suppression of electromagnetic energy.

An object of the present invention is to provide an inexpensive millimeter wave radar capable of easily reducing ground clutter noise and excelling in detection performance.

This object is accomplished in accordance with the features of claim 1. Dependent claims are directed on preferred embodiments of the invention.

Brief Description of the Drawings

Fig. 1 is a partial perspective sectional view of the overall structure of a radar antenna according to the invention.

Fig. 2 illustrates the configuration of a millimeter wave radar.

Fig. 3 is a perspective view of an embodiment of the invention in which a shielding member is directly fitted to a casing.

Fig. 4 is a perspective view of an embodiment in which a shielding member is formed integrated with a casing.

Fig. 5 is a perspective view of an embodiment in which a shielding member is formed integrated with a radome.

Fig. 6 is a profile of an embodiment in which a hood is used as a shielding member.

Fig. 7 is a profile of an embodiment in which a radar antenna fitted with a shielding member is installed within a bumper.

Fig. 8 is a profile of another embodiment in which a shielding member is fitted with a heater.

Fig. 9 is a profile of an embodiment in which a shielding member is provided with a slit.

Fig. 10 is a profile of an embodiment in which a reflected electric wave is utilized.

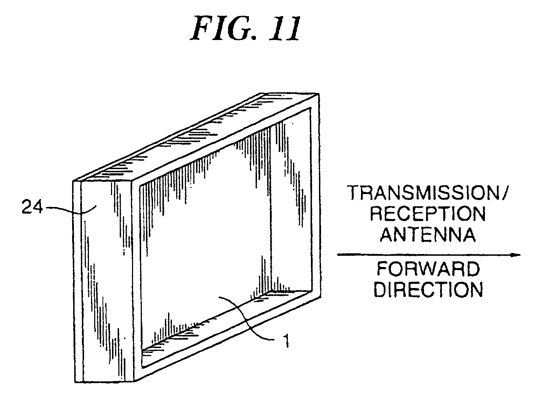

Fig. 11 is a perspective view of a transmission/reception antenna according to the prior art.

Fig. 12 is a diagram illustrating how ground clutters arise.

Fig. 13 is a spectral diagram of a receive signal.

Fig. 14 is a spectral diagram of a receive signal where a shielding member is provided.

Detailed Description of the Preferred Embodiments

The configuration of a preferred embodiment of the present invention will be described in detail below.

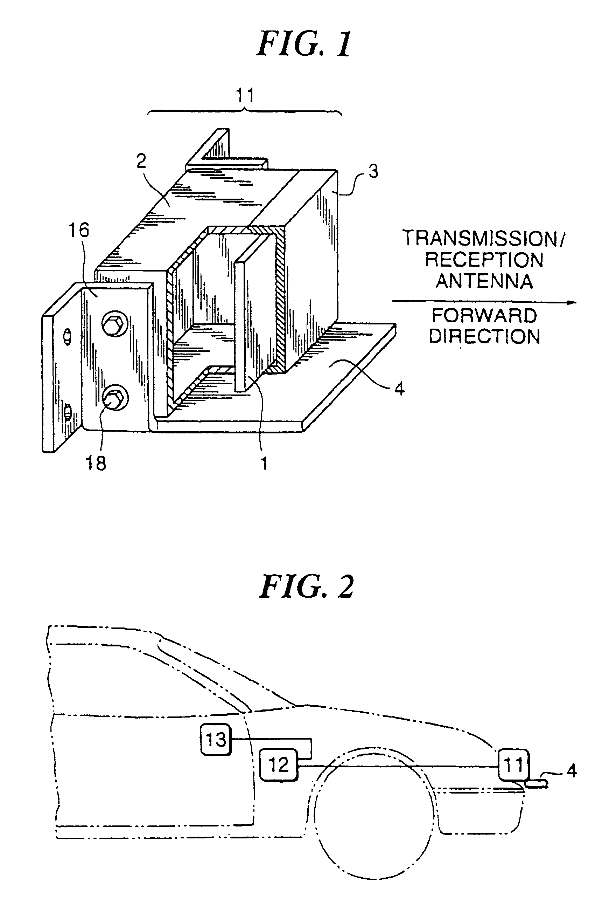

Fig. 2 illustrates a state in which a millimeter wave radar according to the invention is mounted on a vehicle. The millimeter wave radar consists of three elements including an antenna unit 11 for transmitting and receiving electric waves (millimeter wave), an indicator (a display unit) 13 for informing the driver of a target that has been detected, and a control circuit 12 for controlling the antenna 11 and the indicator 13, and the antenna unit 11 is installed on the front part of the vehicle so that it can transmit an electric wave (millimeter wave) in the running direction of the vehicle. Further, a shielding member (electric shielding material) 4 is fitted in a lower front part of the antenna unit 11.

Fig. 1 is a partial perspective sectional view of the overall structure of the antenna unit 11 best illustrating a characteristic of the invention. Referring to Fig. 1, a transmission/reception antenna (transmit and receive antennas) 1, which transmits and receives electric waves (millimeter wave), is housed in a casing 2 for fixing the transmission/reception antenna 1. and a radome 3 (cover) is fitted to the front of the transmission/reception antenna 1 to protect the transmission/reception antenna 1 from spattered pebbles, rain and the like. The antenna unit 11 is fitted to the vehicle with metal brackets 16, at the bottom of which the shielding member 4 is provided protruding from the front of the antenna unit 11.

Next will be described the operation of this embodiment of the invention. Usually, an antenna unit is installed in front of the vehicle for use in detection of any target existing ahead in the running direction of the vehicle. In a Doppler radar system, for instance, which is a version of millimeter wave radar, can figure out the running speed and the distance to the target by transmitting the main beam of an electric wave toward the target and observing the Doppler frequency of the electric wave reflected by the target and the phase difference between the transmitted and received electric waves. However, the transmitted wave has side lobes, and the strong reflections of the side lobes from the road surface (ground clutters) are also received by the reception antenna together with a signal from the target.

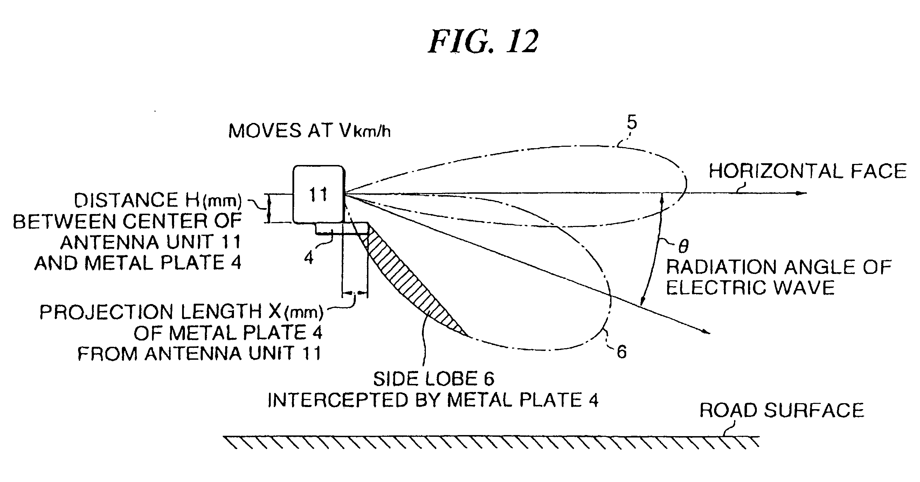

Fig. 12 typically illustrates a side lobe 6, which generates ground clutters, and a main beam 5 in the aforementioned embodiment. Here, the electric wave is supposed to be transmitted from one point on the antenna unit 11. Further, the radiation angle (transmit angle) of the electric wave with reference to the horizontal plane is supposed to be θ positively toward the road surface(downward direction). First, the spectrum of a receive signal in a state in which the shielding member 4 to intercept the side lobe 6 is shown in Fig. 13. In this example, as the antenna unit 11 is moving in the direction of electric wave transmission at a speed of 60 km/h, a Doppler frequency relative to the ground surface is generated. In Fig. 13, the noise floor of region A attributable to a Doppler frequency at no more than 6.7 kHz (corresponding to a speed of 60 km/h) mostly consists of noise attributable to ground clutters, and this noise brings down the S/N ratio, resulting in a drop in the radar's detection capability. Next, by fitting the shielding member 4 to protrude by X mm from the antenna unit 11 and keeping the distance between the electric wave emitting point (transmit portion of millimeter wave) and the shielding member 4 at H mm, side lobes 6 of 0 to 90 degrees in radiation angle θ can be intercepted as represented by Equation (1).

$$X = H/\tan \theta \qquad \text{Equation (1)}$$

For intercepting side lobes 6 of 45 degrees or more in radiation angle θ for example, X = 43.1 mm when H = 43.1 mm. The relationship between the radiation angle θ and the Doppler frequency fd [Hz] is represented by Equation (2). Interception of side lobes 6 of θ = 45 degrees or more can restrain ground clutters corresponding to a Doppler frequency of 4.7 kHz or less. The spectrum of ground clutters and the receive signal in this state is shown in Fig. 14, which indicates that the level of noise due to ground clutters is reduced to that of noise generated by the electronic circuit section of the antenna unit 11, i.e. ground clutters can be almost wholly removed by the shielding member 4.

$$fd = 2 \times V \times \cos \theta/\lambda \qquad \text{Equation (2)}$$

Here, V represents the moving speed (60 km/h in this case) of the antenna unit 11, and λ, the wavelength of the millimeter wave (5 mm in this case).

Further in Fig. 13, the greater the noise due to ground clutters, the lower the Doppler frequency. This is because, with an increase in the radiation angle θ of the electric wave, the distance between the antenna unit and the ground surface shortens, resulting in a rise in the reception intensity of ground clutter noise. Thus, as Equation (2) indicates, θ increases with a decrease in fd, resulting in a shortened distance between the antenna unit and the ground surface, which invites a rise in ground clutter noise. For this reason, interception of side lobes 6, if only their area in which θ is great, can substantially lower the noise floor of ground clutters.

The above-described embodiment, since the shielding member 4 which can intercept or attenuate side lobes 6 is fitted to the metal brackets 16 to project from the lower front part of the transmission/reception antenna 1 as shown in Fig. 1, can reduce inexpensively and easily the impact of ground clutters due to side lobes (i.e. reduce noise) though it uses a conventional antenna unit 11 (while minimizing the increase in size of the antenna unit 11) and thereby to enhance the target detecting capability.

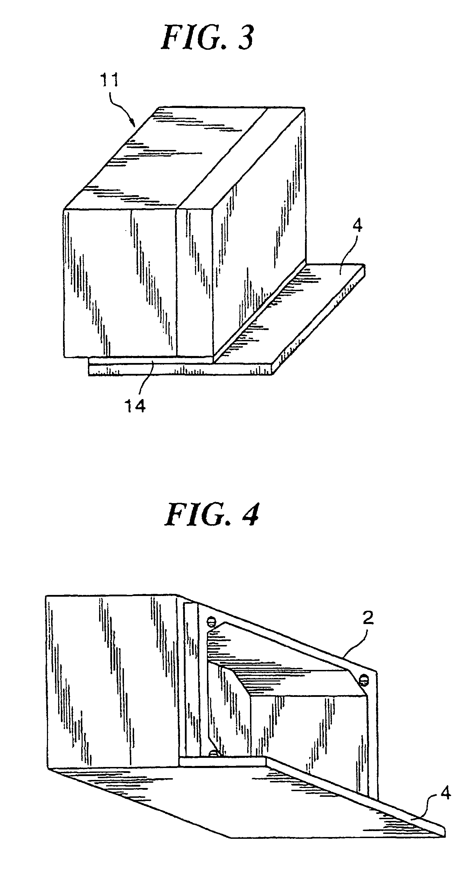

In the above-described embodiment, the shielding member 4 may as well be fitted directly to the antenna unit 11 by adhesive 14 as illustrated in Fig. 3. Or by sticking an electric wave (millimeter wave) absorber to the electric wave (millimeter wave) reflecting surface of the shielding member 4, the intensity of the reflection of side lobes 6 by the shielding member 4 can also be reduced.

Next, other preferred embodiments of the present invention will be described with reference to respectively pertinent drawings.

Fig. 4 is a schematic diagram of an example in which a shielding member is formed of the same member as and integrated with a casing. The shielding member 4 is formed by utilizing part of the casing 2. This embodiment can reduce the amount of labor involved in the fitting of the shielding member 4 to the antenna unit 11.

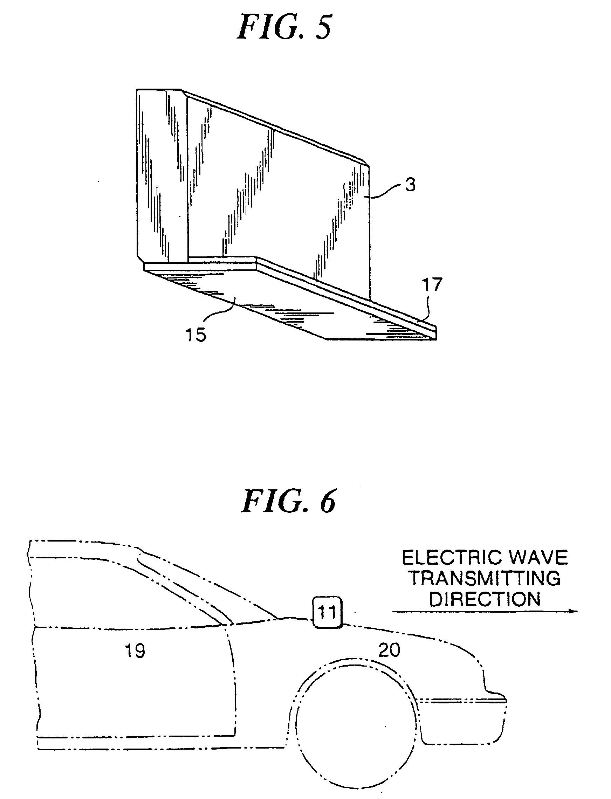

Fig. 5 is a schematic diagram of an example in which part of the radome surface is metal-plated or an electric wave absorber is stuck to it, instead of providing a shielding member. As illustrated, by forming a protruding part 17 on the lower front part of the radome 3 and providing its surface with metal plating 15, a similar effect to that of the shielding member 4 can be achieved. Also, instead of the use of the metal plating 15, an electric wave absorber can be used, or both metal plating and an electric wave absorber may be used in combination. This embodiment can provide a similar effect to an embodiment using a shielding member 4. Further, since its protruding part 17 is integrated with the radome 3, both the manufacturing cost and the weight can be reduced.

Fig. 6 is a schematic diagram of an example in which part of the vehicle on which the antenna unit is to be installed is utilized as a shielding member instead of providing a special shielding member. For instance, by placing the antenna unit 11 on the hood 20 as part of a vehicle 19 as illustrated, part of the vehicle 19, the hood 20 in this particular case, can be substituted for the shielding member 4. This embodiment can intercept side lobes 6 by utilizing part of the vehicle 19, such as the hood 20.

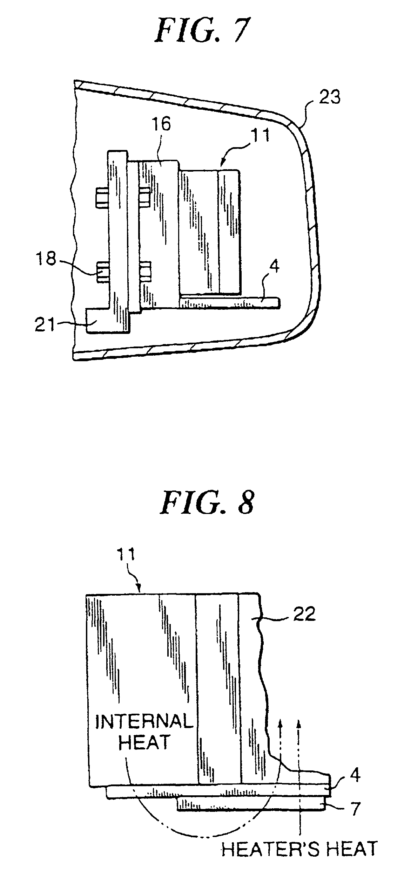

Fig. 7 is a schematic diagram of a millimeter wave radar-mounted vehicle in which a millimeter wave radar, which is an embodiment of the present invention, is installed within the vehicle. The inside part of the vehicle in which the antenna unit 11 with the shielding member 4 is to be installed may be, for instance, within a bumper 23. The bracket 16 on which the antenna unit 11 is mounted is fixed to a vehicle frame 24 by screws 18. This embodiment can reduce the sticking of snow flakes to the antenna unit 11 or the shielding member 4, and can further diminish the risk of the damage of the antenna unit 11 due to contact with any outside object.

Fig. 8 is a schematic diagram of an example in which a device to warm the shielding member is provided. In Fig. 7, reference numeral 7 denotes a heater for melting snow 22, which is stuck to warm the shielding member 4. In this embodiment, wherein the shielding member 4 is warmed with the heater 7, the heat can also melt the snow sticking to the radome 3 and the shielding member 4, thereby to prevent the detecting capability of the radar from being deteriorated by the sticking snow. At the same time, the heat generating within the casing 2 can be transmitted to the shielding member 4 for use in melting the snow.

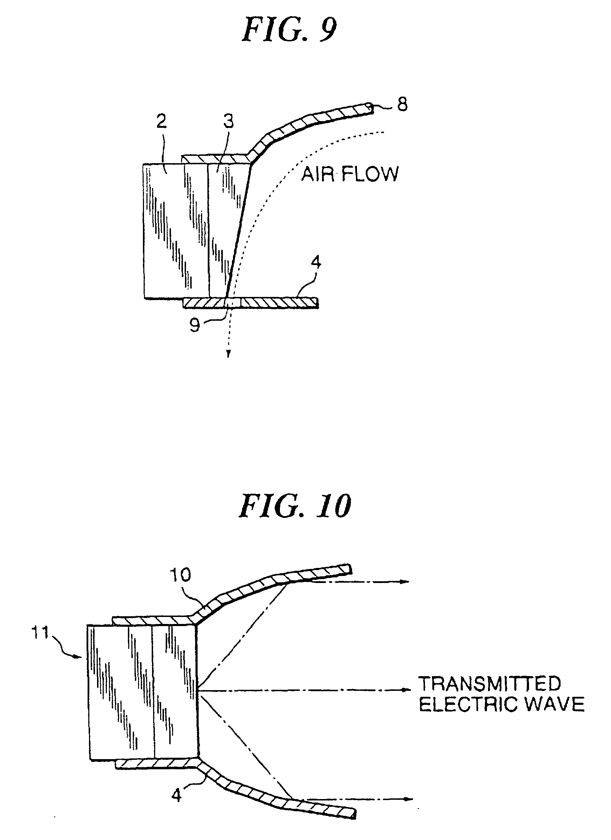

Fig. 9 is a schematic diagram of an example in which a slit is cut in the shielding member. As illustrated, a slit 9 is cut through which to let dust and snow falling on the shielding member 4 fall off. Furthermore, a configuration to generate a flow of air along the surface of the radome 3 may be adopted by fitting an appended structure 8 to gather air streams to facilitate the removal of dust and snow through the slit 9 or inclining the surface shape of the radome 3. This embodiment, by cutting the slit 9 in the shielding member 4, can remove dust and snow sticking to the shielding member 4 through the slit 9, thereby to prevent the dust and snow from deteriorating the detection performance. Further, the installation of the appended structure 8 to collect air flows causes an air stream to generate along the surface of the radome 3 and to utilize its force to remove dust and snow through the slit 9.

Fig. 10 is a schematic diagram of an example in which a transmission/reception antenna, a casing for accommodating the transmission/reception antenna, and a radome for protecting the transmission/reception antenna are provided, and a shielding member having a shape to reflect side lobes in the same direction as the transmitting direction of the main beam is installed outside the radome toward the lower front part of the transmission/reception antenna. In Fig. 10, to the antenna unit 11 is fitted a metallic parabola-shaped shielding member 4 or an appended structure 10, and an electric wave emitted sideways may as well be reflected forward. In this embodiment, by installing the parabola-shaped shielding member 4 or the appended structure 10 in front of the antenna unit 11, ground clutters can be restrained, side lobes can be reflected in the same direction as the main beam, and the directionality of the electric wave can be increased, thereby to enhance the detection performance.

According to the present invention, a millimeter wave radar excelling in detection performance can be provided by installing a shielding member for intercepting side lobes in the lower front part of the transmission/reception antenna, and thereby reducing background noise due to side lobes easily and inexpensively.

**Claims**

1. A millimeter wave radar comprising:

   a transmission/reception antenna (1); and
   a shielding member (4) for intercepting an electric wave from said transmission/reception antenna, the millimeter wave radar being mountable to a vehicle,
   further comprising a casing (2) for accomodating said transmission/reception antenna;
   further comprising a radome (3) for protecting said transmission/reception antenna,
   that the millimeter wave radar is adapted for determining the distance to a target for use in autonomous driving of vehicles or for the collision avoidance, **characterized in that** the shielding member (4)

   - protrudes from the lower front part of said transmission/reception antenna outside said radome,

- is perpendicular to the surface of the antenna (1), and
- intercepts an electric wave from said antenna (1) and/or ground clutters due to side lobes from said transmission/reception antenna.

**2.** A millimeter wave radar as claimed in Claim 1, wherein the shielding member (4) is formed of the same material as, and integrated with, said casing (3).

**3.** A millimeter wave radar as claimed in Claim 1, wherein a part of said radome surface is metal-plated (15) or an electric wave absorber is stuck to it.

**4.** A millimeter wave radar as claimed in Claim 1, wherein a part of the vehicle on which the antenna unit is to be installed is utilized as a shielding member.

**5.** A millimeter wave radar-mounted vehicle within which a millimeter wave radar (11) claimed in one of the Claims 1 to 4 is installed.

**6.** A millimeter wave radar as claimed in Claim 1 or 2, further comprising a device (7) for warming said shielding member.

**7.** A millimeter wave radar as claimed in Claim 1 or 2, wherein a slit (9) is provided in said shielding member.

**Patentansprüche**

**1.** Millimeterwellenradar mit:

einer Sende/Empfangsantenne (1); und
einem Abschirmbauteil (4) zum Abfangen einer elektrischen Welle von der Sende/Empfangsantenne, wobei das Millimeterwellenradar an einem Fahrzeug anbringbar ist,
einem Gehäuse (2) zum Aufnehmen der Sende / Empfangsantenne;
einem Radom (3) zum Schützen der Sende/ Empfangsantenne,

wobei das Millimeterwellenradar zum Bestimmen des Abstands zu einem Ziel zur Verwendung beim autonomen Fahren von Fahrzeugen oder für die Kollisionsvermeidung ausgelegt ist, **dadurch gekennzeichnet,**
**dass** das Abschirmbauteil (4)

- vom unteren Vorderteil der Sende/Empfangsantenne außerhalb des Radoms hervorsteht,
- rechtwinklig zur Oberfläche der Antenne (1) ist, und

- eine elektrische Welle von der Antenne (1) und/ oder Bodenecho aufgrund von Seitenkeulen von der Sende/Empfangsantenne abfängt.

**2.** Millimeterwellenradar nach Anspruch 1, bei dem das Abschirmbauteil (4) aus dem gleichen Material wie das Gehäuse (3) gebaut und mit dem Gehäuse integriert ist.

**3.** Millimeterwellenradar nach Anspruch 1, bei dem ein Teil der Oberfläche des Radoms metall-platiert (15) ist oder bei dem an ihm ein Absorber für elektrische Wellen angebracht ist.

**4.** Millimeterwellenradar nach Anspruch 1, bei dem ein Teil des Fahrzeugs, an dem die Antenneneinheit angebracht wird, als Abschirmbauteil verwendet wird.

**5.** Fahrzeug, das mit einem Millimeterwellenradar versehen ist, bei dem ein Millimeterwellenradar (11) nach einem der Ansprüche 1 bis 4 angebracht ist.

**6.** Millimeterwellenradar nach Anspruch 1 oder 2, mit einer Vorrichtung (7) zum Erwärmen des Abschirmbauteils.

**7.** Millimeterwellenradar nach Anspruch 1 oder 2, bei dem ein Schlitz (9) im Abschirmbauteil vorgesehen ist.

**Revendications**

**1.** Un radar à ondes millimétriques comprenant:

une antenne de transmission/réception (1) et un blindage (4) permettant d'intercepter une onde électrique provenant de ladite antenne de transmission/réception, le radar à ondes millimétriques pouvant être monté sur un véhicule, comprenant en outre un boîtier (2) permettant de loger ladite antenne de transmission/réception;
comprenant en outre un radôme (3) pour protéger ladite antenne de transmission/réception; ce radar à ondes millimétriques est adapté pour déterminer la distance par rapport à une cible et est destiné à être utilisé pour la conduite autonome des véhicules ou pour la prévention des collisions,

**caractérisé en ce que** le blindage (4)

- dépasse de la partie inférieure avant de ladite antenne de transmission/réception à l'extérieur dudit radôme,

- est perpendiculaire à la surface de l'antenne (1), et
- intercepte une onde électrique provenant de ladite antenne (1) et/ou les échos parasites du sol dus aux lobes latéraux de ladite antenne de transmission/réception.

2. Un radar à ondes millimétriques tel qu'il est revendiqué dans la revendication 1, dans lequel le blindage (4) est formé du même matériau que ledit boîtier (3) et est intégré avec ledit boîtier (3).

3. Un radar à ondes millimétriques tel qu'il est revendiqué dans la revendication 1, dans lequel une partie de la surface dudit radôme possède un revêtement métallique (15) ou un absorbeur d'ondes électriques qui est collé dessus.

4. Un radar à ondes millimétriques tel qu'il est revendiqué dans la revendication 1, dans lequel une partie du véhicule sur lequel l'unité d'antenne doit être installée est utilisée comme blindage.

5. Un véhicule équipé d'un radar à ondes millimétriques dans lequel un radar à ondes millimétriques (11) revendiqué dans l'une des revendications 1 à 4 est installé.

6. Un radar à ondes millimétriques tel qu'il est revendiqué dans la revendication 1 ou 2, comprenant en outre un dispositif (7) permettant de chauffer ledit blindage.

7. Un radar à ondes millimétriques tel qu'il est revendiqué dans la revendication 1 ou 2, dans lequel une fente (9) est fournie dans ledit blindage.

## FIG. 1

TRANSMISSION/
RECEPTION
ANTENNA

FORWARD
DIRECTION

## FIG. 2

## FIG. 3

## FIG. 4

## FIG. 5

## FIG. 6

ELECTRIC WAVE
TRANSMITTING
DIRECTION

## FIG. 7

## FIG. 8

INTERNAL HEAT

HEATER'S HEAT

## FIG. 9

AIR FLOW

## FIG. 10

TRANSMITTED ELECTRIC WAVE

## FIG. 11

24

TRANSMISSION/
RECEPTION
ANTENNA

FORWARD
DIRECTION

1

## FIG. 12

MOVES AT Vkm/h

5

HORIZONTAL FACE

DISTANCE H(mm)
BETWEEN CENTER OF
ANTENNA UNIT 11
AND METAL PLATE 4

11

4

$\theta$

RADIATION ANGLE OF
ELECTRIC WAVE

PROJECTION LENGTH X(mm)
OF METAL PLATE 4
FROM ANTENNA UNIT 11

6

SIDE LOBE 6
INTERCEPTED BY METAL PLATE 4

ROAD SURFACE

EP 1 118 872 B1

## *FIG. 13*

NOISE DUE TO GROUND CLUTTER
RECEIVE SIGNAL FROM TARGET

RECEIVE SIGNAL INTENSITY (dB)

10dB/div

S/N RATIO

A

6.7kHz

NOISE ARISING IN
ELECTRONIC CIRCUIT
OF RADAR ANTENNA

DOPPLER FREQUENCY (kHz)

## *FIG. 14*

REMOVED GROUND CLUTTER NOISE
RECEIVE SIGNAL FROM TARGET

RECEIVE SIGNAL INTENSITY (dB)

10dB/div

S/N RATIO

4.7kHz

NOISE ARISING IN
ELECTRONIC CIRCUIT
OF RADAR ANTENNA

DOPPLER FREQUENCY (kHz)